# EUROPEAN PATENT APPLICATION

(11) **EP 3 040 812 A1**
(43) Date of publication of application: **06.07.2016**
(21) Application number: 15202231.5
(22) Date of filing: 22.12.2015
(51) Int. Cl.: G06F 3/01

(54) **SYSTEMS AND METHODS FOR GENERATING HAPTIC EFFECTS BASED ON EYE TRACKING**

(30) Priority: 29.12.2014 US 201414584098
(71) Applicant: Immersion Corporation, San Jose, CA 95134 (US)
(72) Inventor: Levesque, Vincent, Montreal, QC H2J 2R1 (CA); Cruz-Hernandez, Juan Manuel, Montreal H3Z 1T1 (CA); Dauhajre, Abraham, San Jose California 95134 (US); Raynes, Paige, San Jose California 95134 (US); Bhatia, Satvir Singh, San Jose California 95134 (US)
(74) Representative: Beck Greener

(57) **Abstract**

A system includes an eye-tracking device configured to track a user's eye gaze while looking at media content comprising an image, and a processor configured to execute one or more computer program modules, including a content determination module that, when executed by the processor, analyzes the media content to identify the image, an eye gaze determination module that, when executed by the processor, determines a gaze location of the user's eye gaze while looking at the image, and an event determination module that, when executed by the processor, determines an event to trigger based on the identification of the image and the gaze location.

## Description

The present invention is related to systems and methods for generating haptic effects based on eye tracking.

Haptic content is currently used to enhance the experience of, for example, watching a video or playing a video game. Many other types of experiences are limited to the visual aspects of the experience, such as reading a book, newspaper, magazine, etc. Some printed media use the visual design of the graphics and font to attract attention and be more exciting. Some printed media have also moved to digital media in which additional multimedia content, such as audio content, can be added more easily. It is desirable to enhance the reading or viewing experience and provide a more immersive experience for the audience. It is also desirable to ease the human-computer interaction when users interact with visual content of multimedia content.

According to a first aspect of the invention, there is provided a system comprising an eye-tracking device configured to track a user's eye gaze while looking at media content comprising an image, and a processor configured to execute one or more computer program modules, including a content determination module that, when executed by the processor, analyzes the media content to identify the image, an eye gaze determination module that, when executed by the processor, determines a gaze location of the user's eye gaze while looking at the image, and an event determination module that, when executed by the processor, determines an event to trigger based on the identification of the image and the gaze location.

In an embodiment, the system includes a display configured to display the media content comprising the image.

In an embodiment, the system comprises a user interface, and the display is part of the user interface.

In an embodiment, the system further comprises a haptic output device configured to generate a haptic effect to the user based on the gaze location, the identification of the image, and/or triggering of the event.

In an embodiment, the display, the eye-tracking device, the processor, and the haptic output device are part of a single integrated device. In an embodiment, the single integrated device is selected from the group consisting of a smartphone, a tablet, and an e-reader.

In an embodiment, the haptic output device is configured to generate the haptic effect based on the triggering of the event.

In an embodiment, the media content is multimedia content, and the image is provided as part of the multimedia content.

In an embodiment, the event is an opening or closing of a window displayed by the display over the multimedia content.

In an embodiment, the window comprises an advertisement.

In an embodiment, the system comprises a wearable electronic device and the haptic output device is located on the wearable electronic device.

In an embodiment, the wearable electronic device includes a smartwatch.

According to a second aspect of the invention, there is provided a method comprising tracking a user's eye gaze while the user is looking at media content comprising an image, analyzing the media content to identify the image, determining a gaze location of the user's eye gaze, determining an event to trigger based on the identified image and the gaze location.

In an embodiment, the method further comprises generating a haptic effect to the user based on the identification of the image, the gaze location of the user's eye gaze and/or triggering of the event.

In an embodiment, the method further comprises adjusting the haptic effect based on a change in the image being looked at by the user.

In an embodiment, the method further comprises adjusting the haptic effect based on a change in the gaze location of the user's eye gaze.

In an embodiment, the method further comprises triggering the event, and generating the haptic effect is based on the triggering of the event.

In an embodiment, the event further comprises opening a window to display an advertisement or closing the window.

In an embodiment, the method further comprises displaying the media content with a display.

In an embodiment, the method further comprises displaying an advertisement with the display, tracking the user's eye gaze to a location in the advertisement, and generating at least one haptic effect associated with the advertisement.

In an embodiment, a first haptic effect is generated when the user is looking at a first image in the advertisement, and a second haptic effect, different from the first haptic effect, is generated when the user is looking at a second image, different from the first image, in the advertisement.

These and other aspects, features, and characteristics of the present invention, as well as the methods of operation and functions of the related elements of structure and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the invention. As used in the specification and in the claims, the singular form of "a", "an", and "the" include plural referents unless the context clearly dictates otherwise.

The components of the following Figures are illustrated to emphasize the general principles of the present disclosure and are not necessarily drawn to scale. Reference characters designating corresponding components are repeated as necessary throughout the Figures for the sake of consistency and clarity.

Embodiments of the present invention will now be described with reference to the accompanying figures in which:
Figure 1 is a schematic illustration of a system, in accordance with embodiments of the invention;
Figure 2 is a schematic illustration of a processor of the system of Figure 1, in accordance with embodiments of the invention;
Figure 3 is a schematic illustration of an embodiment of the system of Figure 1;
Figure 4 is a schematic illustration of an embodiment of the system of Figure 1;
Figures 5A-5D are schematic illustrations of an embodiment of the system of Figure 1;
Figure 6 is a flowchart of a method, in accordance with embodiments of the invention; and
Figure 7 is a flowchart of a method, in accordance with embodiments of the invention.

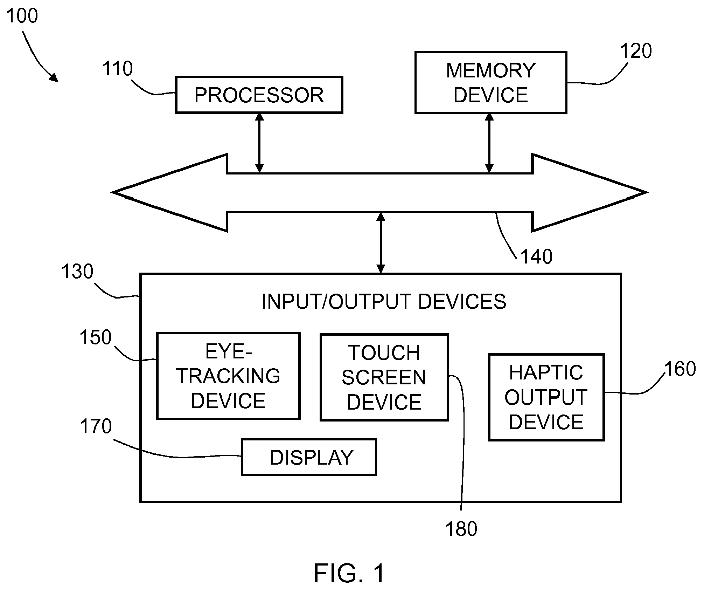

Figure 1 is a schematic illustration of a system 100 in accordance with an embodiment of the invention. The system 100 or portions of the system 100 may be an electronic device(s), such as a desktop computer, laptop computer, electronic workbook, electronic handheld device (such as a mobile phone, smart phone, gaming device, personal digital assistant ("PDA"), portable e-mail device, portable Internet access device, e-reader, calculator, etc.), point-of-sale device, game controller, wearable electronic device, or other electronic device. As illustrated, the system 100 includes a processor 110, a memory device 120, and input/output devices 130, which are interconnected via a bus 140. In an embodiment, the input/output devices 130 may include an eye-tracking device 150, a haptic output device 160, a display 170, a touch screen device 180, and/or other input devices that are configured to receive input from a user of the system 100 and output devices that are configured to output information to the user of the system 100. In an embodiment, the system 100 may be a single integrated electronic device that includes all of the components illustrated in Figure 1. In an embodiment, various components illustrated in Figure 1 may be collocated, while other components may be part of one or more separate devices, as described in further detail below.

The input/output devices 130 may also include specific input devices and output devices. For example, the input devices may include such devices as keyboards, keypads, cursor control devices (e.g., computer mice), other data entry devices, or an audio receiver, such as a microphone. Output devices may include a computer monitor, virtual reality display device, audio output device, such as a speaker, printer, or other peripheral devices. The input/output devices 130 may include devices that are designed to not only receive input from a user, but also provide feedback to the user, such as many examples of touch screen devices.

The eye-tracking device 150 may include any detection means that are used to detect and track eye gaze of a user of the system 100. For example, in an embodiment, the eye-tracking device 150 may include a camera configured to capture an image of an eye of the user of the system 100, and a processor configured to determine the direction of the eye gaze based on the image. The camera may include an infrared light source. In an embodiment, the processor may be the processor 110 illustrated in Figure 1. Image processing techniques to determine eye gaze direction and are well known in the literature and therefore are not described herein.

In an embodiment, the eye-tracking device 150 may include a sensor configured to monitor movements of muscles near the eye of the user, and a processor configured to determine the direction of the eye gaze based on the monitored movement. In an embodiment, the sensor may be configured to measure electrical activity of the muscles moving the eyes. In an embodiment, the processor may be the processor 110 illustrated in Figure 1. Other detection means that provide for the determination of a direction of the user's eye gaze may be used in accordance with embodiments of the present invention. For example, in an embodiment, the user's eye gaze direction may be estimated by analyzing the user's body or head posture.

The eye-tracking device 150 may be a separate device that is mounted in the environment of the user of the system 100, such as on the display 170, or the eye-tracking device 150 may be worn by the user, such as in a pair of glasses. Eye tracking may also be performed through contact lenses. In an embodiment, the eye-tracking device 150 may be part of a handheld electronic device, such as an e-book reader, a tablet, or a smartphone. In an embodiment, the eye-tracking device 150 may be part of a wearable device, such as a head-mounted display, such as Google Glass, contact lenses. In an embodiment, the eye-tracking device 150 may be embedded in or near an object that is expected to generate haptic effects.

Typical eye-tracking devices sense eye movements, but do not know what specific content or object the eyes are looking at. Such information may be obtained by calibrating the eye-tracking device 150, for example, by having the user fixate on specific locations. For example, if the user is reading graphic novels or printed text, the calibration may be performed by making assumptions about where the user is likely to look, and gradually learning the relationship between eye movements and gaze location. In an embodiment, the eye-tracking device 150 may not know what is at the gaze location but may be able to use a camera and computer vision to make such a determination. A head-mounted camera and optical-character recognition (OCR) software may, for example, determine which word is being looked at when the user is looking at text.

In an embodiment, the eye-tracking device 150 may be part of a tablet, for example, that may be configured to determine which pixel the user is looking at. The system 100 may then determine what content or object is located at that pixel, such as a word or picture. Similarly, when the eye-tracking device 150 is part of a larger eye-tracking system, the eye-tracking system may be able to determine what real-world object is at the gaze location. Knowledge about the location of objects in relation to the eye-tracking device 150 may be needed and therefore may work best either when the objects of interest do not move, or when their location can be determined with another tracking system such as RFID.

In an embodiment, the eye-tracking device 150 may also be configured to determine where the user's current eye gaze direction is focused. This may be accomplished by using image processing techniques to determine the position and the shape of the iris of a user's eye, in combination with a model or stored reference image of the iris. In an embodiment, the user's eye gaze direction may be stored as pitch and yaw angles for each eye. With this information, the depth of field of the user's current gaze may also be determined. In an embodiment, other sensors may be used in addition to the eye-tracking device 150 to better determine the user's intent or volition, such as sensors that are typically associated with functional magnetic resonance imaging ("fMRI") or electroencephalogram ("EEG").

In various embodiments, the haptic output device 160 is configured to provide haptic feedback to the user of the system 100 while the user is in contact with a least a portion of the system 100. For example, the haptic output device 160 may provide haptic feedback to the touch screen device 180 itself to impose a haptic effect when the user is in contact with the touch screen device 180 and/or to another part of the system 100, such as a housing containing the input/output devices 130. As discussed in further detail below, the haptic effects may be used to enhance the user's experience when interacting with the system 100.

The haptic feedback provided by the haptic output device 160 may be created with any of the methods of creating haptic effects, such as vibration, deformation, kinesthetic sensations, electrostatic or ultrasonic friction, etc. In an embodiment, the haptic output device 160 may include an actuator, for example, an electromagnetic actuator such as an Eccentric Rotating Mass ("ERM") in which an eccentric mass is moved by a motor, a Linear Resonant Actuator ("LRA") in which a mass attached to a spring is driven back and forth, or a "smart material" such as piezoelectric materials, electro-active polymers or shape memory alloys, a macro-composite fiber actuator, an electro-static actuator, an electro-tactile actuator, and/or another type of actuator that provides a physical feedback such as vibrotactile feedback. The haptic output device 160 may include nonmechanical or non-vibratory devices such as those that use electrostatic friction (ESF), ultrasonic friction (USF), or those that induce acoustic radiation pressure with an ultrasonic haptic transducer, or those that use a haptic substrate and a flexible or deformable surface, or those that provide thermal effects, or those that provide projected haptic output such as a puff of air using an air jet, and so on. Multiple haptic output devices 160 may be used to generate different haptic effects, as discussed in further detail below.

The display 170 is configured to display media content that includes an image. In an embodiment, the display 170 may be a high definition ("HD") display configured to display images in high definition. In an embodiment, the display 170 may display media content that includes static images, such as words or pictures, particularly when the display 170 is part of an e-reader or other handheld device that displays media content that may traditionally be found in print, such as media content that is presented in the form of an e-book or an on-line newspaper, etc. In an embodiment, the display 170 may display media content that includes dynamic images, i.e. videos, such as a live broadcast of an event, such as a sporting event, or a prerecorded event, such as a television show or a movie. Media content as used herein also includes printed images, such as words, pictures, graphics, etc., in embodiments that to not include a display. The touch screen device 180 may be configured as any suitable user interface or touch/contact surface assembly. The touch screen device 180 may be any touch screen, touch pad, touch sensitive structure, computer monitor, laptop display device, workbook display device, kiosk screen, portable electronic device screen, or other suitable touch sensitive device. The touch screen device 180 may be configured for physical interaction with a user-controlled device, such as a stylus, finger, etc. In some embodiments, the touch screen device 180 may include at least one output device and at least one input device. For example, the touch screen device 180 may include the display 170 and a touch sensitive screen comprising at least one sensor superimposed on the display and configured to receive inputs from a user's finger or a stylus controlled by the user.

The processor 110 may be a general-purpose or specific-purpose processor or microcontroller for managing or controlling the operations and functions of the system 100. For example, the processor 110 may be specifically designed as an application-specific integrated circuit ("ASIC") to control output signals to the haptic output device 160 to provide haptic effects. The processor 110 may be configured to decide, based on predefined factors, what haptic effects are to be generated based on a haptic signal received or determined by the processor 110, the order in which the haptic effects are generated, and the magnitude, frequency, duration, and/or other parameters of the haptic effects. The processor 110 may also be configured to provide streaming commands that can be used to drive the haptic output device 160 for providing a particular haptic effect. In some embodiments, the processor 110 may actually be a plurality of processors, each configured to perform certain functions within the system 100. The processor 110 is described in further detail below.

The memory device 120 may include one or more internally fixed storage units, removable storage units, and/or remotely accessible storage units. The various storage units may include any combination of volatile memory and non-volatile memory. The storage units may be configured to store any combination of information, data, instructions, software code, etc. More particularly, the storage units may include haptic effect profiles, instructions for how the haptic output device 160 is to be driven, or other information for generating haptic effects.

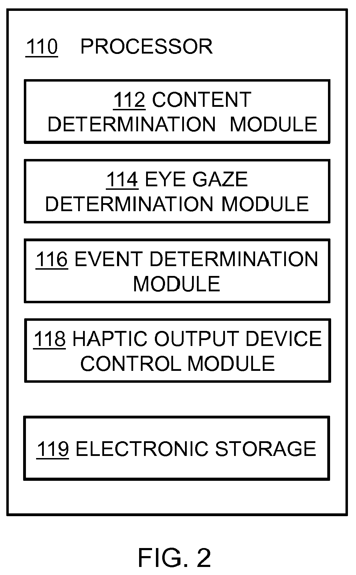

Figure 2 illustrates an embodiment of the processor 110 in more detail. The processor 110 may be configured to execute one or more computer program modules. The one or more computer program modules may include one or more of a content determination module 112, an eye gaze determination module 114, an event determination module 116, a haptic output device control module 118, and/or other modules. The processor 110 may also include electronic storage 119, which may be the same as the memory device 120 or in addition to the memory device 120. The processor 110 may be configured to execute the modules 112, 114, 116, and/or 118 by software, hardware, firmware, some combination of software, hardware, and/or firmware, and/or other mechanisms for configuring processing capabilities on processor 110.

It should be appreciated that although modules 112, 114, 116, and 118 are illustrated in Figure 2 as being co-located within a single processing unit, in embodiments in which the processor 110 includes multiple processing units, one or more of modules 112, 114, 116, and/or 118 may be located remotely from the other modules. The description of the functionality provided by the different modules 112, 114, 116, and/or 118 described below is for illustrative purposes, and is not intended to be limiting, as any of the modules 112, 114, 116, and/or 118 may provide more or less functionality than is described. For example, one or more of the modules 112, 114, 116, and/or 118 may be eliminated, and some or all of its functionality may be provided by other ones of the modules 112, 114, 116, and/or 118. As another example, the processor 110 may be configured to execute one or more additional modules that may perform some or all of the functionality attributed below to one of the modules 112, 114, 116, and/or 118.

The content determination module 112 is configured to receive an input signal associated with the media content that the user is looking at or viewing. The input signal may be provided by a media stream that contains the content, or the input signal may be provided by the eye-tracking device 150 if the eye-tracking device 150 includes a camera and the camera is configured to capture an image of at least part of the content that the user is looking at or viewing. The content determination module 112 is configured to analyze such media content in real time or offline, and send a signal to the event determination module 118 for further processing.

The eye gaze determination module 114 is configured to determine a direction of the eye gaze of the user based on information from the output signals generated by the detector 110. The information related to the direction of the user's eye gaze determined by the eye gaze direction determination module 114 may describe the direction as a vector in an absolute coordinate system, with respect to other objects, and/or in other contexts. Such information may include, without limitation, coordinates and/or angular relationships, such as pitch and yaw angles, as described above. The gaze path produced by the eye-tracking device 150 may be very noisy. Eye movement typically occurs through fixations at some locations followed by quick saccades. The signal output by the eye-tracking device 150 may be filtered to determine what object or image is being paid attention to by the user. A fixation may need to last a certain amount of time to trigger a haptic effect, for example. The eye gaze determination module 114 may output a signal to the event determination module 116 and the haptic output device control module 118.

The event determination module 116 is configured to receive the output signal from the content determination module 112 and the eye gaze determination module 114 and determine an event to trigger based on the signals received. As described in further detail below, the event may include, for example, opening or closing a process or window in a graphical user interface and/or playing a haptic effect(s) or a haptic track based on gaze location and/or the analyzed media content.

The haptic output device control module 118 is configured to receive the output signals from the content determination module 112, the eye gaze determination module 114 and the event determination module 116 and determine the haptic effect to be generated by the haptic output device 160. Once the visual attention of the user has been inferred from the gaze location and the content of what the user is looking at has been determined, the haptic output device control module 118 may determine what haptic effect should be generated and output a signal to the haptic output device 160. The haptic effect generated by the haptic output device 160 may include vibration, friction, deformation, force feedback, projected haptic or any other haptic technology, such as a technology described above. The haptic feedback may be delivered through a handheld device, such as a smartphone or a tablet, or a wearable device, such as a smartwatch, ring, head-mounted display, etc., or any other available device, such as a mouse or other graspable device, a keyboard, or though touchless haptic interfaces, such as puffs of air.

In an embodiment in which the media content is in the form of a book or graphic novel, the system 100 may first need to determine what printed content is being read and retrieve a mapping from content to haptic effects. The determination may be done explicitly by the user or implicitly using computer vision to identify the title or content, or by using other identifiers, such as RFID tags. The system 100 may then obtain a mapping by communicating with the object in question (e.g. an augmented book) or a cloud service, or by using information stored in the system 100. For example, the mapping may be stored in the memory device 120 or the electronic storage device 119 and retrieved by the haptic output device control module 118 when executed by the processor 110.

The content or image being looked at by the user may trigger specific effects, or changes in effects. For example, reading about an explosion may trigger a strong vibration. Alternatively, a haptic track may progress gradually as a paragraph is read to give a mood to the content (much like music in a movie). The system 100 may also not know what content is being looked at (i.e. which book) but may instead have mappings for certain words or images that it can recognize, such as the words "explosion" or "you are here".

In the case of real-word objects, the system 100 may be able to determine what mappings are currently active. This may be done explicitly by the user (e.g., by loading a travel application) or implicitly based geolocation, active beacons, or other means of indicating what haptic content is available in the environment. The system 100 may also be programmed to visually recognize certain objects, or use their RFID tags, and produce specific haptic effects when the objects are looked at by the user.

In an embodiment, haptic effects may be associated with objects, words, or graphic content (i.e. visual content or image) that a user is looking at, as determined by the eye-tracking device 150. In an embodiment, haptic effects may, for example, be triggered as specific words are read in a printed book, or images are looked at in a graphic novel. Haptic effects may similarly be triggered while the user is looking at different objects in his/her environment.

In an embodiment, different haptic effects may be generated or a haptic track may be changed as certain words are read by a user of the system 100 in a book or other printed text, or as graphics are looked at in a graphic novel, or as objects are looked at in the environment.

Unlike the use of a haptic track with audio-video content, the progression of the haptic track in accordance with an embodiment of the invention is determined by where the user looks instead of simply being based on time and a synchronization to audio-visual content. As noted above, specific effects may be triggered as specific words, graphic content or objects are looked at. The system 100 may also advance in a track of haptic effects based on where the user is looking. For example, a rumbling effect may be initiated as the user begins reading a sentence and continue until the end of the paragraph, at which point an explosion effect may be produced to mark an event.

In embodiments in which the content is printed on paper, the determination may be made by capturing and analyzing an image of what the reader is focusing on. The content may then be compared to a database (e.g., an association of words and haptic effects), or to an index associated with the particular content being read (e.g., a digital version of a novel with haptic triggers on certain words). In embodiments in which the content is digital, the eye-tracking device 150 may determine the location of the user's eye gaze and the word or graphic being looked at may be extracted without using the image analysis described above.

In an embodiment, the event determination module 116 may be programed with smart algorithms to avoid repetitive haptic feedback as words or sentences are re-read, or the user makes quick saccades to preview the next words in a sentence. Such algorithms may process signals output by the content determination module 112 and the eye gaze determination module 114 in order to determine that the content is being re-read or the user has skipped ahead. If such a determination is made, a signal may be output to the haptic output device control module 118. The haptic output device control module 118 may not output a signal to the haptic output device 160 if it is determined that words or sentences are being re-read, or may output a signal to the haptic output device 160 to produce a haptic effect if it is determined that the user is skipping ahead and missing important words or sentences.

In an embodiment, the content may include a map. As the user of the system 100 looks at different elements on the map, different haptic effects may be triggered. For example, different haptic effects may be provided for cities, roads, a present location, and/or an intended destination. In an embodiment, the content may include a printed advertisement. A specific branding haptic effect may be triggered as the user looks at a brand's logo, for example.

In an embodiment, the content may include any object in the user's environment. For example, a travel application may trigger haptic effects whenever the user is looking at a point of interest. A recommendation system may similarly trigger haptic effects when the user is looking at good or bad restaurants or menu items. A user may also program the system 100 to trigger haptic effects for relevant objects. For example, a positive effect may be felt by the user when the user looks at someone he/she has been looking for, or a negative effect may be felt by the user when the user looks at a piece of cake he/she should not eat.

In an embodiment, eye tracking may also be used to author the haptic effects or haptic track to be associated with the printed content. The author, for example, may look at a word to select it and then associate a haptic effect to the selected word. This may be faster than alternatives, for example, if the author is allowed to say out loud the name of the effect to be played or to press a corresponding key on the keyboard without looking. In an embodiment, haptic effects may be synchronized to the content of an audiobook or podcast, and haptic effects may be produced as a reader flips between tiles in a digital graphic novel.

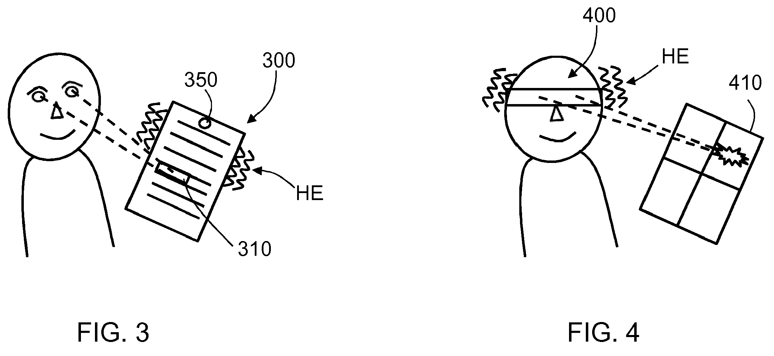

Figure 3 illustrates an implementation of an embodiment of the invention. In the illustrated embodiment, a user of the system 100 is reading a book on a handheld electronic device, which in this embodiment is a tablet 300. An eye-tracking device 350, such as the eye-tracking device 150 described above, is mounted on or is part of the tablet 300. As the user reads a particular word 310, for example, the word "explosion", the eye-tracking device 350, detects the user's eye gaze position and a processor in the tablet 300, such as the processor 110 described above, determines that an explosion effect is associated with that particular location in the book. A haptic output device, such as the haptic output device 160 described above, in the tablet 300 generates a haptic effect HE in the form of a vibration that makes the reading more immersive.

Figure 4 illustrates an implementation of an embodiment of the invention. In the illustrated embodiment, a user of the system 100 is reading a graphic novel while wearing a head-mounted display 400. The head-mounted display 400 keeps track of the user's gaze direction and determines when the user has reached a tile 410 with an explosion. The head-mounted display 400 produces a haptic effect HE in the form of a vibration that mimics an explosion on the head-mounted display 400 at just the right time to make the graphic novel more immersive.

In an implementation, a user of the system 100 may be reading an entertaining science-fiction novel on his/her tablet. In the novel, the protagonist is being chased through a busy market and the user may feel the action via the haptic effects that are generated by the system 100 as the user reads the novel. As the user reads that the protagonist crashed through a door, the user may feel a haptic effect as if the crash happened in the user's hands. Other haptic effects may be generated when it is determined that the user is reading parts of the story in which the protagonist falls into a pool of water, punches an assailant, and falls to the ground, for example.

In an implementation, a user of the system 100 may be reading another book that is even more immersive. Instead of individual haptic effects that are generated as the user reads particular scenes, the book creates a mood with a complex haptic track that continuously changes as the user reads the book and reaches different parts.

In an implementation, a user of the system 100 may be reading a graphic novel while wearing a head-mounted display, such as Google Glass. The head-mounted display includes the eye-tracking device 150 described above for detecting what the user is looking at and vibrates at the right time to make the novel feel even more immersive. The user may feel explosions, punches, etc., as the user reads about them in the novel. In an implementation, a user of the system 100 may be trying to make sense of the metro map of Paris. As the user looks at different parts of the map, the user may feel different effects for his/her current location, his destination, as well as a route that his/her Google Glass unit is recommending.

In an implementation, a user of the system 100 may be doing a walking tour of Barcelona with his/her smartphone. The user may feel distinct effects when he/she looks at buildings or locations that have a special significance to him/her. The user may also choose to have more atmospheric effects that match what he/she is looking at. The site of a historic battle, for example, may produce a war-like haptic track, while an old factory may feel like the rhythm of the work being done there via a haptic track.

In an embodiment, text or illustrations being read or looked at by a user of the system 100 may be moving. A haptic track may, for example, be played as text scrolls on the display 170. Some web browsers and e-book readers, for example, may be set to automatically scroll the text or swap pages. The approach may be the same as for static text if eye tracking is available. If eye tracking is not available, the haptic effects that are generated may be based on the content currently shown on the display 170. In some implementations, the haptic effects may be based on the overall mood of the page or on the extreme events being shown (e.g., highly emotional content). In some implementations, the display 170 may show only a few words at a time, in which case the haptic association may be easier to make.

In an embodiment, the eye-tracking device 150 may detect when the user has skipped reading a word or sentence. This may occur, for example, when the user is trying to read very fast (e.g., in diagonal) or when the text is moving too fast to be read (e.g., advertisement on a moving bus). In such cases, the system 100 may determine whether the user has skipped some content that should not have been skipped, e.g. a critical event in a novel or something that should be of interest to the reader. The system 100 may then produce a haptic notification to warn the user and/or highlight the skipped words visually. The same may be done when looking through a list for a specific word or name.

In an embodiment, the system 100 may adjust the haptic effects used in a book based on the fonts used. The system 100 may, for example, select haptic effects that are smoother and of lower intensity when the font used is in cursive or is more rounded and pleasant to the eyes. The system 100 may select sharper haptic effects when the font used is a more "blocky" font, such as a typewriter face. The haptic effects may also be tied to the imagined source of the text, such as writing with a pen versus a typewriter. The system 100 may be configured to take into account factors such as the presence or absence of serifs, bold or italic font, the size of the text, highlighting, etc. The analysis may be based on the digital content of a book (e.g., name of the font and properties) or could be done through image processing (e.g., sharpness or continuity of the strokes, etc.). In an embodiment, the analysis may be completed by the content determination module 114 when executed by the processor 110.

In an embodiment, the haptic feedback may reinforce the structure of a book or new article. For example, headers may feel different from the body of the text. In an embodiment, the haptic feedback may be used to set the context of different sections or chapters. The haptic feedback, for example, may remind the reader of which character is narrating the current chapter. The haptic feedback may also indicate which character is currently speaking.

In an embodiment, the haptic track for a book may be derived at least in part from the audiobook version of the novel. Amazon's Kindle, for example, knows how to associate locations in a book to locations in an audiobook. In an embodiment, the system 100 may analyze the music and sound effects in an audiobook, the tone of the reader, and any changes in voices (real or faked). This information may be used to generate haptic effects, for example, that match the mood of a chapter or the identity of the character that is speaking, when the user is reading a printed paper or e-book version of the audiobook.

In an embodiment, the haptic theme that is used in the haptic track may also be adapted to information about the content of the book or the reader. The haptic track may, for example, depend on the age and gender of the reader, and whether he or she is reading the book for the first time. The theme may also depend on the language of the book, and the abstract themes discussed in the book or a section (e.g., love in romance novel). The haptic effects may also be adapted to the type of content being read. For example, an explosion should feel different if read in the context of a news item as opposed to a thriller novel.

In an embodiment, eye tracking may be used to monitor whether the reader is paying attention to the content. It is, for example, possible to detect when the user is thinking, distracted or sleeping from the movement of the eyes. Haptic feedback may be used to "wake up" the reader and bring his/her attention back to the book when desired, such as when studying. In an embodiment, the system 100 may automatically place a bookmark on a page when the user looks away from the page, and notify the user that this has been done via a haptic effect. In an embodiment, the system may generate a haptic effect to warn the user when he/she has been reading for too long.

In an embodiment, eye tracking may be used for user input. For example, haptic feedback may be generated while using eye gaze to select, highlight, query a dictionary, or trigger a page swap. In an embodiment, an eye gesture may be used to enter a password, or a smartwatch may be woken up just by looking at it. In an embodiment, multi-eye gestures may be used as an input, for example, the user may cross his/her eyes in order to zoom an image being looked at.

In an embodiment, eye tracking may be used in a navigation context. For example, navigation cues may be provided with haptic effects by inferring a driver's intention from the user's gaze. The driver may look at a GPS to determine the next road to turn onto. By using eye tracking, the system 100 may provide confirmation to the driver via a haptic effect that the road the driver is looking at is the correct road to turn onto.

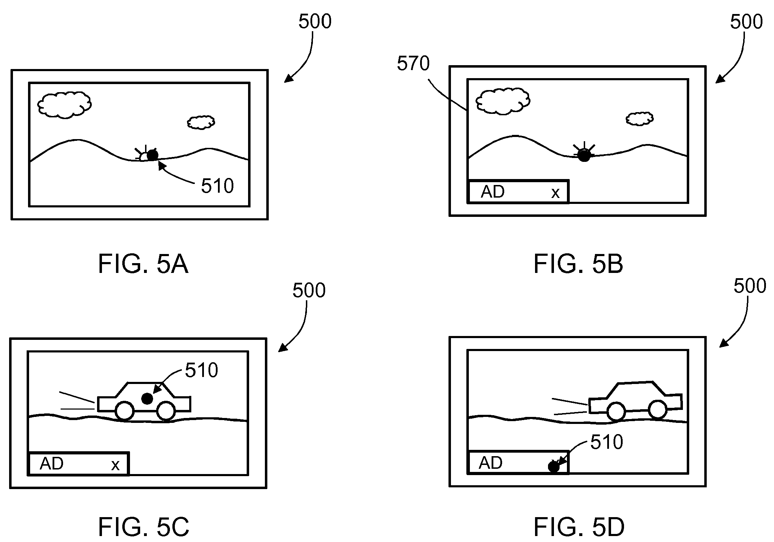

In an embodiment illustrated in Figures 5A-5D, eye tracking may be used to close advertisements that suddenly appear when the user is watching a video on a mobile device, for example. For example, Figure 5A illustrates a mobile device 500, such as a smartphone, that is playing a video of a sunset. An eye-tracking device, such as the eye-tracking device 150 described above, detects that the user is looking at the sun, as denoted by a spot 510 in Figure 5A. As the user is watching the sunset, an advertisement AD is launched on the mobile device's display 570, as illustrated in Figure 5B, and overlays the video of the sunset, as illustrated in Figure 5C. In the illustrated embodiment, the advertisement is for a car. As indicated by the location of the spot 510 in Figure 5C, the user is watching the advertisement. The advertisement may include haptic effects to enhance the advertisement's visual effects and/or to play a haptic brand related to the advertisement. When the user has seen enough, or has looked at the advertisement for a predetermined time, such as 1-2 seconds, for example, the user may look at the X in the window in the lower left corner of the display 570 to close the advertisement AD, as illustrated in Figure 5D. Using eye tracking as an input to close the advertisement may be easier than using a finger, especially if the advertisement is shown on a small display, such as on a smartphone. Haptic effects may be generated by the haptic output device 160 when the advertisement window appears in view, when the user's eyes focus on the advertisement, and/or when the advertisement is closed after the user sees the advertisement for a certain period of time. Tracking the user's eye gaze may ensure the user actually looks at the advertisement, instead of closing the advertisement without looking at it.

In an embodiment, eye tracking may be used to play advertisements that include audio, video, and haptic content when the user focuses on an advertisement within a video while the video is playing. For example, in an embodiment, a user of the system 100 may be watching a football game on the display 170 during a live broadcast. As a camera pans across the stadium, an advertisement banner in the stadium may catch the user's eye. The eye-tracking device 150 may be used to track the user's gaze to the location of the advertisement banner and the processor 110 may determine the content of the advertisement and trigger an image of the advertised product to be overlaid on the video for a brief period of time. The advertisement may be enhanced with haptic effects and overlay the audio, video and haptic effects of the original multimedia stream.

In an embodiment, eye tracking may be used to play haptic content that depends on the location of the user's eye gaze. For example, while a video is playing, if the user focuses on an expensive sports car, a haptic signature of the expensive sports car may be generated, and if the user focuses on an economy car, a different haptic signature may be generated for the economy car. In an embodiment, when the user of the system 100 explores a virtual/augmented environment with the user's sight, the generated haptic effect(s) associated with objects in the virtual/augmented environment may depend on the location where the user is focusing his/her attention.

In an embodiment, the user of the system 100 may watch a live video stream of a video-console-gameplay and may see all the action of the different players within the game. The haptic effects that are generated for the user as a spectator may depend on whether he/she is looking at player-1 or player-N. For example, if player-1 has a machine gun, the user may feel the haptic effects associated with a machine gun, and if the user is looking at player-N that is being wounded and is hand fighting, the user may feel all the haptic interactions related to this character, such as punches felt on the hands and body.

In an embodiment, eye tracking may be used to transfer content from one electronic device to another electronic device. For example, the user of the system 100 may be watching a video being displayed by the display 170 in the form of a television in one room and decide to go another room while wanting to continue to watch the video. The user may look at his/her smartwatch to transfer the video content to the smartwatch so that the user may continue to watch the video on the smartwatch.

For computers and mobile devices, users typically provide input to such devices through keyboards, mice, and/or touch screens, which require mechanical movement, and for interactions with small areas, the input may not be precise enough and may take too long to get the input right, which may frustrate the user. In an embodiment of the invention, eye tracking may be used to detect the gaze of the user and use the detected gaze as an input to the computer. For example, the user may close computer programs/applications just by looking at such programs/applications for a certain period of time so that the user does not have to use his/her finger, which may take additional time due to the mechanical nature of the hand/finger motion.

In an embodiment, new content may be displayed when the user focuses his/her gaze on a specific area of the multimedia content. For example, new programs or applications may be opened or launched within interactive media, haptic signatures or brands may be played back, including other useful information to the user.

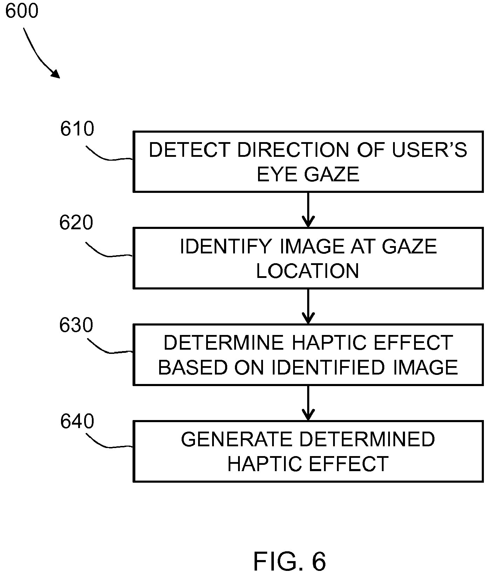

Figure 6 illustrates a method 600 in accordance with an embodiment of the invention.

At 610, a direction of a user's eye gaze is detected with the eye-tracking device 150 described above. At 620, an image at the detected gaze location is identified by the content determination module 112 when the content determination module 112 is executed by the processor 110. At 630, a haptic effect based on the identified image is determined by the haptic output device control module 118 when the haptic output device control module 118 is executed by the processor 110. At 640, the determined haptic effect is generated by the haptic output device 160.

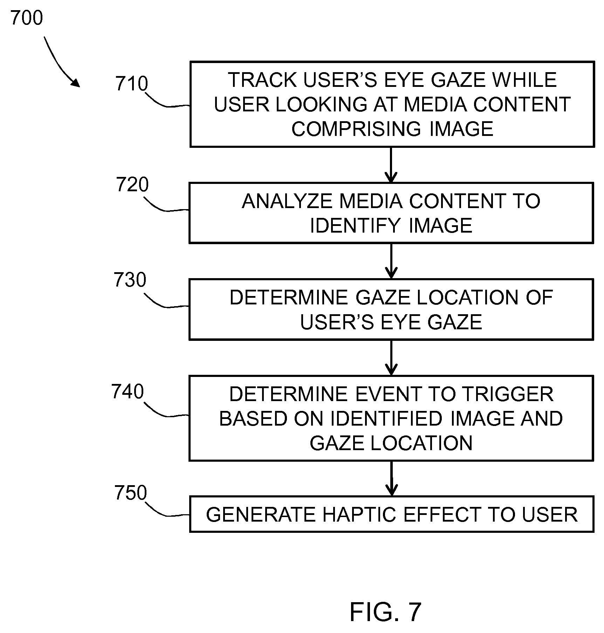

Figure 7 illustrates a method 700 in accordance with an embodiment of the invention.

At 710, a user's eye gaze is tracked while the user is looking at media content that includes an image. The user's eye gaze may be tracked with the eye-tracking device 150 described above. At 720, the media content is analyzed to identify the image. The media content may be analyzed with the content determination module 112 when the content determination module 112 is executed by the processor 110. At 730, a gaze location of the user's eye gaze is determined. The gaze location may be determined by the eye gaze determination module 114 when the eye gaze determination module 114 is executed by the processor 110. At 740, an event to trigger is determined based on the identified image and the gaze location. The event may be determined with the event determination module 116 when the event determination module is executed by the processor 110. At 750, a haptic effect may also be generated to the user based on the identification of the image, the gaze location, and/or triggering of the event. The haptic effect may be determined by the haptic output device control module 118 when the haptic output device control module 118 is executed by the processor 110, and the haptic effect may be generated by the haptic output device 160.

Embodiments of the invention described above may bring the excitement of haptic content to other types of media, such as books and graphics novels, even when read on paper, and therefore may allow these types of media to better compete with multimedia experiences, such as video games and television, that are often more stimulating and exciting. Embodiments of the invention described above also associate haptic content to other real-world experiences, such as looking at a building in a guided tour of a city, which may make such experiences more fun and compelling.

The embodiments described herein represent a number of possible implementations and examples and are not intended to necessarily limit the present disclosure to any specific embodiments. Instead, various modifications can be made to these embodiments as would be understood by one of ordinary skill in the art. Any such modifications are intended to be included within the scope of the present disclosure as protected by the following claims.

## Claims

1. A system comprising:
an eye-tracking device configured to track a user's eye gaze while looking at media content comprising an image; and
a processor configured to execute one or more computer program modules, including
a content determination module, when executed by the processor, analyzes the media content to identify the image,
an eye gaze determination module, when executed by the processor, determines a gaze location of the user's eye gaze while looking at the image, and
an event determination module, when executed by the processor, determines an event to trigger based on the identification of the image and the gaze location.

2. The system according to claim 1, further comprising a display configured to display the media content comprising the image.

3. The system according to claim 2, further comprising a user interface, wherein the display is part of the user interface.

4. The system according to claim 2, further comprising a haptic output device configured to generate a haptic effect to the user based on the gaze location, the identification of the image, and/or triggering of the event.

5. The system according to claim 4, wherein the display, the eye-tracking device, the processor, and the haptic output device are part of a single integrated device.

6. The system according to claim 4, wherein the haptic output device is configured to generate the haptic effect based on the triggering of the event, wherein the media content is multimedia content, and wherein the image is provided as part of the multimedia content.

7. The system according to claim 6, wherein the event is an opening or closing of a window displayed by the display over the multimedia content.

8. The system according to claim 4, further comprising a wearable electronic device, wherein the haptic output device is located on the wearable electronic device.

9. A method comprising:
tracking a user's eye gaze while the user is looking at media content comprising an image;
analyzing the media content to identify the image;
determining a gaze location of the user's eye gaze; and
determining an event to trigger based on the identified image and the gaze location.

10. The method according to claim 9, further comprising generating a haptic effect to the user based on the identification of the image, the gaze location of the user's eye gaze and/or triggering of the event.

11. The method according to claim 10, further comprising adjusting the haptic effect based on a change in the image being looked at by the user and/or adjusting the haptic effect based on a change in the gaze location of the user's eye gaze.

12. The method according to claim 10, wherein the method further comprises triggering the event, wherein generating the haptic effect is based on the triggering of the event and the event comprises opening a window to display an advertisement or closing the window.

13. The method according to claim 9, further comprising displaying the media content with a display.

14. The method according to claim 13, further comprising displaying an advertisement with the display, tracking the user's eye gaze to a location in the advertisement, and generating at least one haptic effect associated with the advertisement.

15. The method according to claim 14, wherein a first haptic effect is generated when the user is looking at a first image in the advertisement, and wherein a second haptic effect, different from the first haptic effect, is generated when the user is looking at a second image, different from the first image, in the advertisement.
